# EUROPÄISCHE PATENTSCHRIFT

(11) **EP 0 360 754 B1**
(45) Veröffentlichungstag und Bekanntmachung des Hinweises auf die Patenterteilung: **13.01.1993**
(21) Anmeldenummer: 89810694.3
(22) Anmeldetag: 14.09.1989
(51) Int. Cl.: F16D 3/04

(54) **Kreuzscheibenkupplung**
Oldham-type disc coupling
Accouplement à disques de type oldham

(30) Priorität: 20.09.1988 CH 3491/88
(43) Veröffentlichungstag der Anmeldung: 28.03.1990
(73) Patentinhaber: GUTAG INNOVATIONS AG, CH-3280 Murten (CH)
(72) Erfinder: Güttinger Kurt, CH-3280 Murten (CH)
(74) Vertreter: Klein, Ernest

(56) Entgegenhaltungen:
- CH-A- 381 929
- DE-A- 3 438 718
- DE-A- 3 543 025
- FR-A- 832 123
- GB-A- 103 463
- US-A- 2 433 791
- US-A- 3 128 611

## Beschreibung

### Technisches Gebiet

Die Erfindung betrifft eine Kreuzscheibenkupplung zur Verbindung parallel verlagerter Bauteile, beispielsweile Wellen, wobei der zwischen den Naben der zwei zu kuppelnden Bauteile frei bewegliche Zwischenring auf seinen Planseiten je zwei unter 90° zueinanderstehende Leisten trägt, die in entsprechende Nuten der Naben eingreifen.

Kreuzscheibenkupplungen eignen sich besonders als Kopplungsglied für eine auf einer Bahn umlaufenden Einrichtung, bei der zwei Bauteile in einer vorbestimmten winkligen Beziehung zueinander gehalten werden müssen. Dies ist beispielsweise der Fall bei Einrichtungen, wie sie Rotationskolben-Verdrängermaschinen darstellen.

### Stand der Technik

Kreuzscheibenkupplungen der eingangs genannten Art sind bekannt beispielsweise aus den EP 10930 B1, US-A-4,437,820 und DE-A-27 35 664. Es handelt sich bei allen diesen Einrichtungen um sogenannte Verdrängungsmaschinen für kompressible Medien. Sie bestehen zum einen aus einem durch spiralartige, sich von einer Seitenwand senkrecht erstreckenden Umfangswände begrenzten Förderraum, der von einem ausserhalb der Spirale liegenden Einlass zu einem innerhalb der Spirale liegenden Auslass führt. Zum andern weisen sie einen in den Förderraum ragenden, ebenfalls spiralartigen Verdrängungskörper auf. Dieser ist in Bezug auf den Förderraum zur Ausführung einer kreisenden verdrehungsfreien Bewegung gelagert. Sein Zentrum ist gegenüber dem Zentrum der Umfangswände exzentrisch so versetzt, dass der Verdrängungskörper stets sowohl die aussenliegende als auch die innenliegende Umfangswand des Förderraumes an je mindestens einer fortschreitenden Dichtlinie berührt. Während des Betriebes der Maschine werden deshalb entlang des Förderraumes zwischen dem Verdränger und den beiden Umfangswänden des Förderraumes mehrere sichelförmige Arbeitsräume eingeschlossen, die sich vom Einlass durch den Förderraum hindurch zum Auslass hin bewegen. Hierbei kann sich je nach Umschlingungswinkel der Spirale das Volumen des geförderten Arbeitsmittels zunehmend verringern bei einer entsprechenden Erhöhung des Arbeitsmitteldruckes.

Die Kreuzscheibenkupplung bildet bei all diesen bekannten Maschinen jeweils das rotationshemmende Mittel für den Verdränger. Dessen radiale Versetzung wird begrenzt durch die Berührung der spiralförmigen Rippen mit den Wandungen der Förderkammern. Die Begrenzung entspricht theoretisch einem Kreis, in diesem Fall dem Translationskreis. Der gegenüber der Förderkammer drehfreie Verdränger muss nun mittels der Kreuzscheibenkupplung so geführt werden, dass die Parallelführung einen grösseren Durchmesser zulässt als es dem Durchmesser des Translationskreises entspricht. Der Grund hierfür ist, dass die Radialverschiebung des Verdrängers durch die Kombination Rippe/Kammerwand begrenzt werden soll und nicht durch die führende Kreuzscheibenkupplung. Anhand dieser Regel sind die Abmessungen für die Kreuzscheibenkupplung einfach festzulegen.

Es herrscht allgemein die Meinung, dass derartige Kreuzscheibenkupplungen für die Uebertragung von grossen Drehmomenten und für grosse Drehzahlen ungeeignet sind wegen der auftretenden Biegewechselbeanspruchung und der Verluste durch Reibung. Da während des Betriebes die Leisten in den Nuten ständig hin und her gleiten, sollte zudem zur Verminderung der Reibungsverluste und des Verschleisses die Kreuzscheibenkupplung in einem Oelbad laufen. So weisen beispielsweise die Leisten der Kreuzscheibenkupplung nach DE-A-27 35 664 - obwohl sie aus einem selbstschmierenden Material wie Polyimid bestehen - an ihren seitlichen Gleitflächen regelrechte Oelnuten auf, welche die Schaffung eines wirkungsvollen und leistungsfähigen Oelfilms um die Leisten herum fördern sollen.

Bei allen bekannten Kreuzscheibenkupplungen bestehen die Leisten aus rechtwinkligen Blöcken, die in entsprechend konfigurierte Nuten eingreifen. Die obenangeführten Bedenken gegen eine Anwendung der Kreuzscheibenkupplung sind insoweit verständlich, als das seitliche Spiel in den Nuten zwecks ordentlicher Führung minimal sein muss. Dies führt aber zwangsläufig zu Reibflächen, die sich abnützen. Darüberhinaus können bei Eindringen von Schmutz in die Führung deren Teile gegeneinander klemmen, was die Funktionsfähigkeit der Kupplung beeinträchtigt.

### Darstellung der Erfindung

Der Erfindung liegt deshalb die Aufgabe zugrunde, eine Kreuzscheibenkupplung zu gestalten, welche auch mit zunehmendem Materialabtrag infolge Verschleiss spielfrei bleibt.

Erfindungsgemäss wird die Aufgabe dadurch gelöst, dass die Leisten an ihren Reibflächen konvex gewölbt sind, dass die tragenden Wandungen der Nuten zur Aufnahme der Leisten entsprechend konkav geformt sind und dass der Nutengrund zwecks Berührungsfreiheit mit der Leiste zurückversetzt ist.

Der Vorteil der Erfindung ist darin zu erblicken, dass mit der neuen Konfiguration eine sich im Betrieb selbsteinstellende und nahezu wartungsfreie Kreuzscheibenkupplung geschaffen ist.

Es ist besonders zweckmässig, wenn die Reibflächen der Leisten und die tragenden Flächen der Nuten im Querschnitt Kreisform aufweisen. Hierdurch wird gewährleistet, dass die tragende Zone jederzeit hinreichend gross ist, unabhängig von der Grösse der auf die Kupplung wirkenden axialen und horizontalen Kräfte.

### Kurze Beschreibung der Zeichnung

In der Zeichnung sind ein Ausführungsbeispiel und ein Anwendungsbeispiel der Erfindung schematisch dargestellt. Es zeigen:
Fig. 1 einen Längsschnitt durch eine Pumpe mit umlaufenden Ringkolben
Fig. 2 einen Querschnitt durch die Pumpe gemäss Linie A-A in Fig 1
Fig. 3 eine perspektivische Ansicht einer zu montierenden Kreuzscheibenkupplung
Fig. 4 die Geometrie der reibenden Teile einer Kreuzscheibenkupplung
Fig. 5 eine unbelastete Kupplung mit vorgespanntem Zwischenring

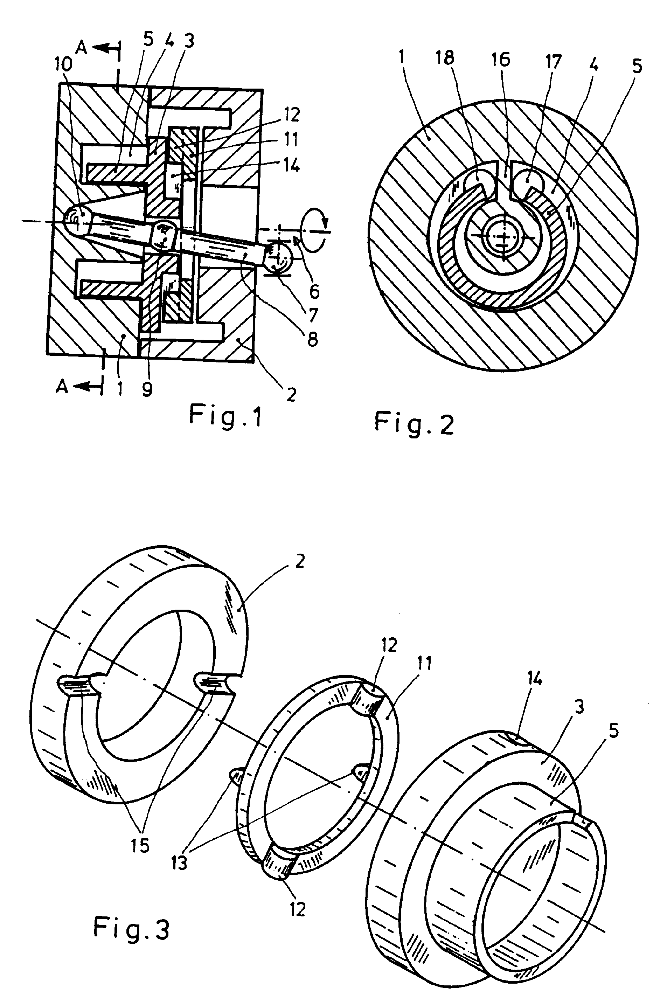

In der stark vereinfachten Pumpendarstellung gemäss Fig. 1 und 2 sind nur die für das Verständnis der Erfindung wesentlichen Teile dargestellt. In den verschiedenen Fig. sind die gleichen Teile jeweils mit denselben Bezugszeichen versehen.

### Weg zur Ausführung der Erfindung

Im wesentlichen besteht die Pumpe nach den Fig. 1 und 2 aus zwei Gehäusehälften 1, 2, welche auf geeignete Weise miteinander verbunden sind, und dem darin einliegenden Verdränger 3. In die linke Gehäusehälfte 1 ist eine ringförmige Förderkammer 4 eingearbeitet. Sie ist mittels eines Steges 16, der sich über die ganze Kammertiefe erstreckt, unterteilt. Beidseitig des Steges sind in der Rückwand der Gehäusehälfte 1 der Einlass 17 und der Auslass 18 für das zu fördernde Arbeitsmittel angeordnet. In diese Förderkammer greift die ebenfalls ringförmige Rippe 5 des Verdrängers 3 ein. Der Ring ist an jener Stelle, die dem Steg 16 gegenüberliegt, geschlitzt. Während des Betriebes führt der Verdränger eine orbitale Bewegung aus.

Hierzu ist ein Antrieb mittels Taumelstab vorgesehen. Ein nicht näher dargestellter Kurbeltrieb 6 ist kurbelseitig mit einer Kugelgelenkpfanne bestückt, in welcher das Kugelende 7 eines Taumelstabes 8 drehbar gelagert ist. Ueber einen Kugelbund 9 ist der Taumelstab praktisch ohne radiales Spiel in der Nabe des Verdrängers 3 drehbar und taumelfäh ig gelagert. An seiner in die linke Gehäusehälfte 1 eingreifenden Seite ist der Taumelstab ebenfalls über ein Kugelende 10 gelagert.

Anlässlich der kreisenden Bewegung berührt der Ringkolben ständig sowohl die innere als auch die äussere Umfangswand der Förderkammer. Durch seine Lageänderung wird zum einen über den Eintritt 17 Arbeitsmittel in die Kammer 4 hineingesaugt und zum andern über den Auslass 18 aus der Maschine hinausgefördert.

Zur verdrehungsfreien Führung des Verdrängers 3 ist nun eine Kreuzscheibenkupplung vorgesehen. Sie besteht im wesentlichen aus einem Zwischenring 11, welcher an seinen Planseiten mit Leisten 12, 13 versehen ist. Im gezeigten Beispiel lassen sich die dem Verdränger 3 zugekehrten Leisten 12 in Relation zum Verdränger auf einer gemeinsamen Vertikalachse verschieben. Sie greifen dabei in entsprechend konfigurierte, vertikal verlaufende Nuten 14 im Verdränger 3 ein. Die Leisten 13, welche senkrecht zu den Leisten 12 angeordnet sein müssen - im vorliegenden Fall also horizontal und deshalb in dem Längsschnitt nach Fig. 1 nicht dargestellt - sind der feststehenden rechten Gehäusehälfte 2 zugekehrt und in Relation zu dieser auf einer gemeinsamen Horizontalachse verschiebbar. Dabei gleiten sie in entsprechend konfigurierten, horizontal in der Stirnseite der Gehäusehälfte 2 eingearbeiteten Nuten 15.

Das Prinzip ist in Fig. 3 erkennbar, in welcher die Naben der zu kuppelnden Bauteile als einfache Ringe dargestellt sind. Dabei stehen in Anlehnung an die in den Fig. 1 gezeigte Pumpe die Bezugszahl 2 für den feststehenden Gehäuseteil und die Bezugszahlen 3 und 5 für die kreisende Verdrängerscheibe mitsamt ringförmiger Rippe.

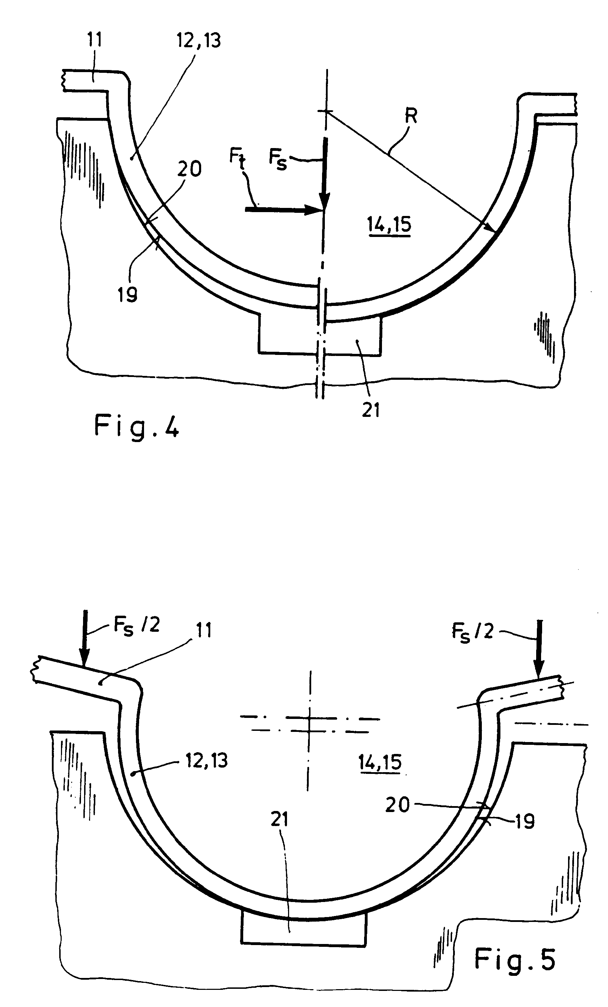

Die eigentliche Geometrie der aufeinander gleitenden Teile ist in Fig.4 gezeigt. Die konvexe Reibfläche 19 der Leiste muss selbstverständlich übereinstimmen mit der konkaven Wölbung der Nutwandung 20. Gewählt wurde für beide eine Kreisform mit dem Radius R. Die rechte Hälfte der Fig.4 zeigt eine eingelaufene Kupplung, wo die Nutwandung über die ganze zur Verfügung stehende Fläche trägt. Die linke Hälfte der Fig. 4 zeigt die Kupplung vor dem Einfahren. Wegen Fertigungsungenauigkeiten oder aber wegen bewusster unterschiedlicher Radiuswahl von "Kugel und Pfanne" liegt die Leiste nicht voll ein. Dennoch wird sie bereits über einen nicht unbeträchtlichen Abschnitt am oberen Rand der Nut getragen. Es ist auch zu erkennen, dass ein Klemmen infolge unregelmässigen Materialabtrages nicht möglich ist. Schliesslich ist die Kupplung absolut spielfrei, unabhängig von der gegenseitigen Lage von Leiste und Nut.

Der Nutengrund 21 ist derart zurückversetzt, dass auch bei vollständigem Einliegen der Leiste in der Nut eine Berührung zum Nutengrund vermieden wird. Der ausgesparte Nutengrund vermeidet auf jeden Fall, dass bei Deformationen des Zwischenringes mitsamt Leisten die tragende Zone sich im Kopf der Leisten, d.h. im Nutengrund befindet. In diesem Fall könnte nämlich an den Nutenrändern ein seitliches Spiel zwischen Wand und Leisten entstehen, wie Versuche gezeigt haben.

Bei den vorherrschenden Kräften handelt es sich zum einen um den Anpressdruck Fs, der gemäss Fig. 4 vertikal wirkt, d.h. in Achsrichtung der Kupplung. Diese Kraft entspricht in der Regel einer Federkraft; sie ist infolge der minimalen Federwege einigermassen konstant. Zum andern wirkt eine Horizontalkraft Ft auf die vertikal verlaufenden Leisten 12, die in Grösse und Richtung variabel ist. Beides ist abhängig von der Lage und Grösse der Reibkräfte zwischen der ringförmigen Rippe 5 des Verdrängers 3 und den Wandungen der Förderkammer 4.

Die auf die tragende Wandung 20 der Nuten wirkende Normalkraft ist die Resultierende aus den beiden Kräften Fs und Ft. Es ist somit erkennbar, dass der Belastung entlang der tragenden Zone nicht gleichmässig ist. Wenn Ft grösser ist als Fs, so ist die Belastung im oberen Segmentabschnitt der Nut grösser als im unteren. Andererseits kann es vorkommen, dass bei Umkehr der Kraftverhältnisse der mittlere Vektor der Reaktionskraft sich langsam nach abwärts richtet. Hier gilt es nun zu vermeiden, dass der Kraftvektor in den Nutengrund hineinwandert. Abhilfe schafft der zurückversetzte Nutengrund.

Aus Fig.4 ist im übrigen erkennbar, dass der Zwischenring und die Leisten einteilig sind. Es kann sich um ein tiefgezogenes Werkstück handeln, was sich auf die Fertigungskosten sehr günstig auswirkt.

In der beschriebenen Anwendung bei Verdrängermaschinen kann es sich als vorteilhaft erweisen, wenn das einteilige Werkstück aus korrosionsfestem Federstahl besteht. Wie in Fig.5 dargestellt, besteht dann die Möglichkeit, den Zwischenring so vorzuspannen, dass bei allen Betriebszuständen ein spielfreies Anliegen in den Nuten gewährleistet ist, Daneben übt das Element auch noch jene Axialkraft auf den Verdränger 3 auf, die notwending ist, damit die Dichtwirkung zwischen den Stirnseiten der Rippe 5 des Verdrängers 3 und der Förderkammer 4 aufrechterhalten bleibt.

### Bezugszeichenliste

- 1,2: Gehäusehälfte
- 3: Verdränger
- 4: Förderkammer
- 5: Rippe
- 6: Kurbeltrieb
- 7: Kugelende
- 8: Taumelstab
- 9: Kugelbund
- 10: Kugelende
- 11: Zwischenring
- 12, 13: Leiste
- 14, 15: Nut
- 16: Steg
- 17: Einlass
- 18: Auslass
- 19: Reibfläche von 12, 13
- 20: tragende Wandung von 14, 15
- 21: Nutengrund
- R: Radius von 19, 20
- Ft: Axialkraft auf 12, 13
- Fs: Horizontalkraft auf 12

## Patentansprüche

1. Kreuzscheibenkupplung zur Verbindung parallel verlagerter Bauteile, beispielsweile Wellen, wobei der zwischen den Naben der zwei zu kuppelnden Bauteile frei bewegliche Zwischenring (11) auf seinen Planseiten je zwei unter 90° zueinanderstehende Leisten (12, 13) trägt, die in entsprechende Nuten (14, 15) der Naben eingreifen,
dadurch gekennzeichnet,
dass die Leisten (12, 13) an ihren Reibflächen (19) konvex gewölbt sind, dass die tragenden Wandungen (20) der Nuten (14, 15) zur Aufnahme der Leisten entsprechend konkav geformt sind und dass der Nutengrund (21) zwecks Berührungsfreiheit mit der Leiste zurückversetzt ist.

2. Kreuzscheibenkupplung nach Anspruch 1, dadurch gekennzeichnet, dass die Reibflächen der Leisten und die tragenden Flächen der Nuten im Querschnitt Kreisform aufweisen

3. Kreuzscheibenkupplung nach Anspruch 2, dadurch gekennzeichnet, dass der Zwischenring (11) mitsamt der Leisten (12, 13) ein einteiliges, vorgespanntes Werkstück aus Federstahl ist.

## Claims

1. Oldham coupling for connecting parallel-misaligned components, for example shafts, the intermediate ring (11), freely movable between the hubs of the two components to be coupled, carrying two strips (12, 13) at 90° to one another on each of its faces, which strips engage in corresponding grooves (14, 15) of the hubs,
characterised in that
the strips (12, 13) are cambered convexly on their rubbing surfaces (19), in that the bearing walls (20) of the grooves (14, 15) for accepting the strips are correspondingly shaped concavely, and in that the bottom (21) of the groove is set back for the purpose of freedom of contact with the strip.

2. Oldham coupling according to Claim 1, characterised in that the rubbing surfaces of the strips and the supporting surfaces of the grooves are circular in cross-section.

3. Oldham coupling according to Claim 2, characterised in that the intermediate ring (11) together with the strips (12, 13) is an integral, prestressed workpiece in spring steel.

## Revendications

1. Joint Oldham pour l'assemblage de composants décalés parallèlement, comme par exemple des arbres, dans lequel la bague intermédiaire (11) librement mobile entre les moyeux des deux composants à coupler porte sur chacune de ses faces planes deux nervures (12, 13) disposées à 90° l'une par rapport à l'autre qui s'engagent dans des rainures (14, 15) correspondantes des moyeux, caractérisé en ce que les nervures (12, 13) ont une courbure convexe à leurs faces de frottement (19), les parois portantes (20) des rainures (14, 15) ont une courbure concave correspondante pour accueillir les nervures, et en ce que le fond des rainures (21) est déporté pour assurer l'absence de contact avec la nervure.

2. Joint Oldham selon la revendication 1, caractérisé en ce que les surfaces de frottement des nervures et les surfaces portantes des rainures présentent une section transversale de forme circulaire.

3. Joint Oldham suivant la revendication 2 caractérisé en ce que la bague intermédiaire (11) forme avec les nervures (12, 13) une pièce unique, précontrainte, en acier à ressort.
